# FASCICULE DE BREVET EUROPEEN

(11) **EP 2 233 752 B1**
(45) Date de publication et mention de la délivrance du brevet: **12.10.2016**
(21) Numéro de dépôt: 10157984.5
(22) Date de dépôt: 26.03.2010
(51) Int. Cl.: F16L 23/10, F16L 33/06, B60C 17/04, F16B 35/04

(54) **Collier de serrage et dispositif de roulage à plat l'incorporant**
Schlauchklemme und Runflat-Vorrichtung, die sie umfasst
Hose clamp and run-flat device including same

(30) Priorité: 27.03.2009 FR 0901520
(43) Date de publication de la demande: 29.09.2010
(73) Titulaire: HUTCHINSON, 75008 Paris (FR)
(72) Inventeur: Marsaly, Olivier, 95290, L'ISLE ADAM (FR); Auvray, Stéphane, 60260, LAMORLAYE (FR)
(74) Mandataire: Gevers & Orès

(56) Documents cités:
- EP-A- 0 798 141
- US-A- 4 468 842

## Description

La présente invention concerne un collier de serrage de type à ceinture annulaire pourvue de moyens de raccordement d'au moins une paire d'extrémités adjacentes de la ceinture, et un dispositif de roulage à plat l'incorporant destiné à équiper un ensemble monté pour véhicule automobile. D'une manière générale, un tel collier de serrage est destiné à enserrer une ou plusieurs parois de géométrie au moins en partie cylindrique, comme par exemple une face de soutien radialement externe d'un dispositif de roulage à plat à maintenir sur une jante de roue, bien que l'invention puisse s'appliquer également au raccordement de tuyaux ou de conduites, à titre non limitatif.

En particulier, la présente invention concerne un collier de serrage selon le préambule de la revendication 1. Un tel collier de serrage est connu du document US 4 468 842 A.

Il est connu par les documents DE-A1-3926626 et FR-A-2 902 175 de raccorder les deux extrémités adjacentes d'une ceinture métallique d'un collier de serrage par une vis pourvue d'un écrou et montée à travers les boucles respectivement formées par ces extrémités.

Un inconvénient majeur des colliers présentés dans ces documents est que la sécurité mécanique du serrage réalisé par l'ensemble vis-écrou n'est pas totalement assurée en utilisation, en ce sens que l'on peut avoir un desserrage intempestif de l'écrou de serrage et donc de l'ensemble du collier, par exemple sous l'effet de déformations de la ou des paroi(s) enserrée(s) par ce collier et/ou de vibrations.

Le document WO-A1-2008/132348 présente un collier de serrage qui est destiné à enserrer un dispositif annulaire de roulage à plat pour le maintenir au contact de la jante en roulage et dont la ceinture de serrage peut être de type métallique, à serrage réglable et verrouillable par des moyens mécaniques, par exemple via des tourillons.

Un but de la présente invention est de proposer un collier de serrage comportant une ceinture de préférence métallique présentant au moins une paire d'extrémités espacées l'une de l'autre dans la direction circonférentielle, des moyens de raccordement de la ou de chaque paire d'extrémités entre elles avec un serrage réglable dans cette direction et un organe de verrouillage de ces moyens de raccordement, collier qui permette de remédier à l'inconvénient précité en garantissant via l'organe de verrouillage un serrage fiable du collier en utilisation, même sous des contraintes radiales élevées.

A cet effet, un collier selon l'invention est tel que cet organe est monté solidaire de l'une de ces extrémités de sorte à occuper une position de déverrouillage où il est dégagé de ces moyens pour le serrage et desserrage du collier et une position de verrouillage où il vient en prise avec eux de sorte à s'opposer à ce desserrage.

Selon une autre caractéristique de l'invention, les moyens de raccordement peuvent être aptes à rapprocher ou à éloigner lesdites extrémités l'une de l'autre par une rotation appliquée à ces moyens respectivement dans le sens d'un serrage ou d'un desserrage du collier, et l'organe de verrouillage peut être alors adapté pour s'opposer à la rotation de ces moyens dans la position de verrouillage.

Selon une autre caractéristique de l'invention, les moyens de raccordement peuvent comprendre au moins une tige cylindrique présentant en ses portions terminales respectives deux filetages en sens opposés qui sont guidés en rotation dans deux premier et second tourillons transversaux fixés auxdites extrémités à raccorder, sous la commande d'un organe de manoeuvre de cette tige solidaire en rotation d'une portion centrale de celle-ci, l'organe de verrouillage pouvant être alors monté pivotant sur le premier tourillon de sorte à coopérer en butée avec cet organe de manoeuvre dans la position de verrouillage.

On notera que l'on peut avantageusement prévoir pour chaque portion terminale de la tige un filetage multiple à grand pas, afin de pouvoir réaliser un serrage/ desserrage rapide de cette tige.

Avantageusement, l'organe de verrouillage peut être alors formé d'une chape articulée présentant deux ailes qui sont montées pivotantes sur ledit premier tourillon en s'étendant latéralement de part et d'autre de ce dernier et qui se terminent par un tronçon de verrouillage conçu pour entourer étroitement l'organe de manoeuvre dans la position de verrouillage de sorte à l'empêcher de tourner.

Encore plus avantageusement, cet organe de manoeuvre peut présenter une forme d'écrou à plusieurs pans, par exemple à six pans, ledit tronçon de verrouillage pouvant alors présenter une section transversale sensiblement en U renversé agencée pour être monté au contact de l'organe de manoeuvre en position de verrouillage, latéralement par les ailes du U et en le surmontant par l'âme de ce U.

Selon un premier exemple de réalisation de l'invention, ledit tronçon de verrouillage est apte à venir se clipser réversiblement autour dudit organe de manoeuvre en étant comprimé élastiquement contre des arêtes de ces pans d'écrou, au moins par lesdites ailes. Le matériau utilisé pour l'organe de verrouillage est alors prévu suffisamment souple pour assurer ce clipsage et suffisamment résistant pour empêcher la rotation de l'organe de manoeuvre et donc de la tige filetée. Ce matériau peut être par exemple un acier à ressort. En variante, on peut prévoir d'adjoindre à la face interne du tronçon de verrouillage un renfort métallique indéformable en forme de U renversé épousant le contour de ce tronçon pour le rigidifier (de sorte à empêcher la rotation de la tige filetée) à l'exception des extrémités libres des ailes du U de ce tronçon qui seraient alors dépourvues de ce renfort interne pour conférer à ces extrémités d'ailes la souplesse nécessaire à leur clipsage sur l'écrou de manoeuvre.

Selon un second exemple de réalisation de l'invention, ledit tronçon de verrouillage est apte à venir au contact de l'organe de manoeuvre par lesdites ailes et ladite âme du U, ce tronçon étant en outre muni d'une goupille transversale par exemple de type bêta monté amovible à travers ces ailes et directement sous l'organe de manoeuvre dans la position de verrouillage. Dans ce cas, le matériau de l'organe de verrouillage doit être rigide (e.g. en un acier quelconque ou autre) et suffisamment résistant pour empêcher la rotation de l'ensemble organe de manoeuvre - tige filetée.

Selon une autre caractéristique de l'invention, lesdites extrémités à raccorder peuvent être recourbées radialement vers l'extérieur et en sens opposé l'une de l'autre en formant chacune une boucle d'un seul tenant avec le reste de la ceinture, lesdits tourillons étant enveloppés par les parties recourbées respectives de ces boucles en y étant immobilisés par des moyens de retenue. La partie recourbée de chaque extrémité à raccorder peut être alors ajourée pour laisser passer les filetages respectifs de ladite tige, lesquels sont respectivement guidés dans deux orifices débouchants taraudés formés dans lesdits tourillons avec des taraudages de sens opposés.

Selon un mode de réalisation de l'invention, lesdits moyens de retenue de chaque tourillon comprennent deux anneaux élastiques qui enserrent les deux extrémités latérales d'au moins ledit second tourillon (i.e. d'au moins celui sur lequel n'est pas articulé l'organe de verrouillage), de sorte à empêcher toute translation latérale de ce(s) tourillon(s) dans la ou les boucle(s) correspondante(s). On peut ainsi se passer de ces anneaux élastiques de retenue sur ledit premier tourillon (i.e. celui portant l'organe de verrouillage) en prévoyant que cet organe lui-même soit apte à bloquer ce premier tourillon en translation dans la boucle le recevant.

Un dispositif de roulage à plat selon l'invention est destiné à équiper un ensemble monté sans chambre à air pour véhicule automobile qui comprend une jante de roue et un pneumatique monté sur la jante, le dispositif étant destiné à soutenir le pneumatique suite à une chute de pression de gonflage et comprenant :
- un anneau de soutien présentant une face de soutien radialement externe destinée à soutenir le pneumatique en roulage à plat et dans laquelle est formé circonférentiellement au moins un renfoncement radial, et
- au moins un collier de serrage qui enserre l'anneau de sorte à le maintenir sensiblement au contact de la jante en roulage et qui est appliqué sur ce renfoncement radialement en retrait de la face de soutien, ce collier étant tel que défini ci-dessus.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue en demi-coupe axiale d'un ensemble monté dont le dispositif de roulage à plat incorpore un collier de serrage selon l'invention,
la figure 2 est une vue en perspective d'un collier de serrage selon le premier exemple de l'invention montrant l'organe de verrouillage en position de verrouillage autour des moyens de raccordement des extrémités du collier,
la figure 3 est une vue partielle en perspective du collier de serrage de la figure 2 montrant dans le détail l'agencement de l'organe de verrouillage autour des moyens de raccordement dans une position de déverrouillage,
la figure 4 est une vue partielle en perspective du collier de la figure 2 montrant, à partir de la position de déverrouillage de la figure 3, la mise en place de l'organe de verrouillage autour des moyens de raccordement dans la position de verrouillage,
la figure 5 est une vue partielle de côté du collier de serrage montré à la figure 4 dans cette même position de verrouillage,
la figure 6 est une vue en perspective des seuls moyens de raccordement du collier selon les figures 2 à 5, dans un exemple préférentiel de réalisation de l'invention,
la figure 7 est une vue partielle en perspective d'un collier de serrage selon une variante de la figure 3 correspondant au second exemple de l'invention, montrant l'agencement de l'organe de verrouillage autour des moyens de raccordement dans la position de déverrouillage, et
la figure 8 est une vue partielle en perspective du collier de la figure 7 montrant la mise en place de l'organe de verrouillage autour des moyens de raccordement dans la position de verrouillage.

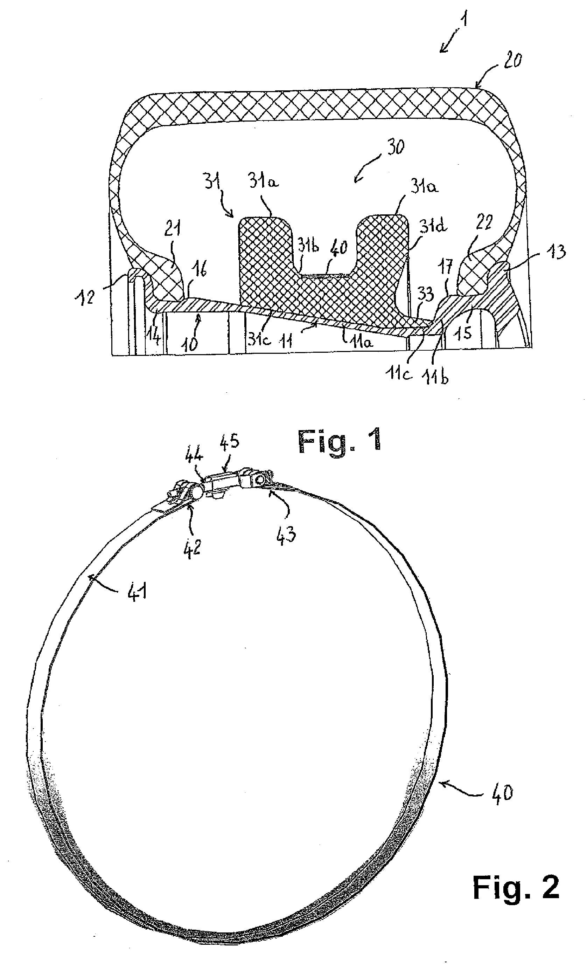

La figure 1 illustre une utilisation possible, parmi d'autres, d'un collier de serrage 40 selon l'invention, étant précisé que celle-ci n'est nullement limitée à cette application d'ensemble monté pour véhicule automobile et qu'elle englobe d'autres utilisations de ce collier, telles que des raccordements de tuyaux ou de conduites, par exemple.

L'ensemble monté 1 de la figure 1 comprend une jante de roue 10 asymétrique de type monobloc comportant un creux de jante 11 circonférentiel, un pneumatique 20 monté contre des rebords axialement interne et externe 12 et 13 de la jante 10, et un dispositif de roulage à plat 30 monté dans le creux de jante 11 et destiné à soutenir le pneumatique 20 suite à une chute de pression de gonflage à l'intérieur de l'ensemble monté 1. La jante 10 comporte des sièges de jante axialement interne et externe 14 et 15 respectivement destinés à recevoir des talons 21, 22 du pneumatique 20, chaque siège de jante 14, 15 étant délimité axialement par l'un des rebords 12, 13 et, optionnellement dans l'exemple de la figure 1, par un bossage circonférentiel 16, 17 adjacent.

Dans cet exemple de réalisation, le creux de jante 11 est à fond 11a essentiellement oblique qui est légèrement incliné axialement vers l'extérieur et radialement vers l'intérieur et qui est délimité axialement à l'intérieur par le bossage 16 et axialement à l'extérieur par une paroi latérale axialement externe 11b, laquelle s'étend axialement et surtout radialement vers l'intérieur à partir du bossage 17 adjacent. Plus précisément, le fond 11a du creux de jante 11 se termine axialement vers l'extérieur par une courte portée sensiblement horizontale 11 c se prolongeant par la paroi 11 b.

Le dispositif 30 à monter sur ce fond 11a comprend :
- un anneau de soutien 31 monobloc en matériau élastomère ou plastique, sensiblement en forme de U dans cet exemple de réalisation et présentant une face de soutien 31a radialement externe qui est destinée à soutenir le pneumatique 20 en roulage à plat et dans laquelle est formée une gorge circonférentielle 31b définie par la base du U, et
- un collier annulaire métallique de serrage 40 appliqué sur la gorge 31 b en étant radialement en retrait par rapport à la face de soutien 31 a (définie à la figure 1 par les sommets radialement externes des deux ailes du U) et de manière à enserrer l'anneau 31, de sorte à le maintenir au contact de la jante 10 en roulage.

Comme illustré à la figure 1, la profondeur de la gorge 31b est relativement importante par rapport à la hauteur radiale moyenne de l'anneau 31, étant par exemple égale à la moitié environ de cette hauteur radiale moyenne séparant la face de soutien 31 a de la face radialement interne 31c de l'anneau 31.

Cette face radialement interne 31c est conçue pour épouser le profil axial du creux de jante 11, i.e. dans cet exemple tant sa portion principale oblique 11a que la portée 11c. A cet effet, l'anneau 31 comporte des moyens 33 pour le caler dans le creux de jante 11, constitués dans cet exemple d'une lèvre circonférentielle qui est formée axialement en saillie sur la face latérale axialement externe 31 d de l'anneau 31 et qui fait partie intégrante de l'anneau 31. Cette lèvre de calage 33 présente une largeur axiale de l'ordre de celle de la portée 11c, étant conçue pour être appliquée sur cette dernière et au contact de la paroi latérale externe 11 b du creux 11.

Concernant l'utilisation d'un collier de serrage 40 selon l'invention en relation avec un dispositif de roulage à plat, on notera que l'exemple de la figure 1 n'est pas limitatif et l'on se reportera par exemple au document précité WO-A1-2008/132348 pour d'autres modes de réalisation d'un ensemble monté recevant un ou plusieurs colliers 40 selon l'invention.

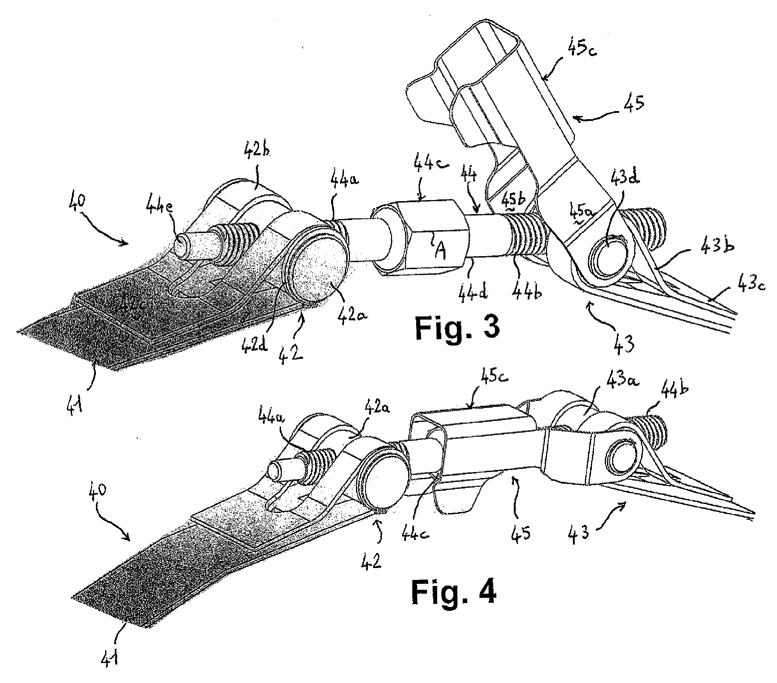

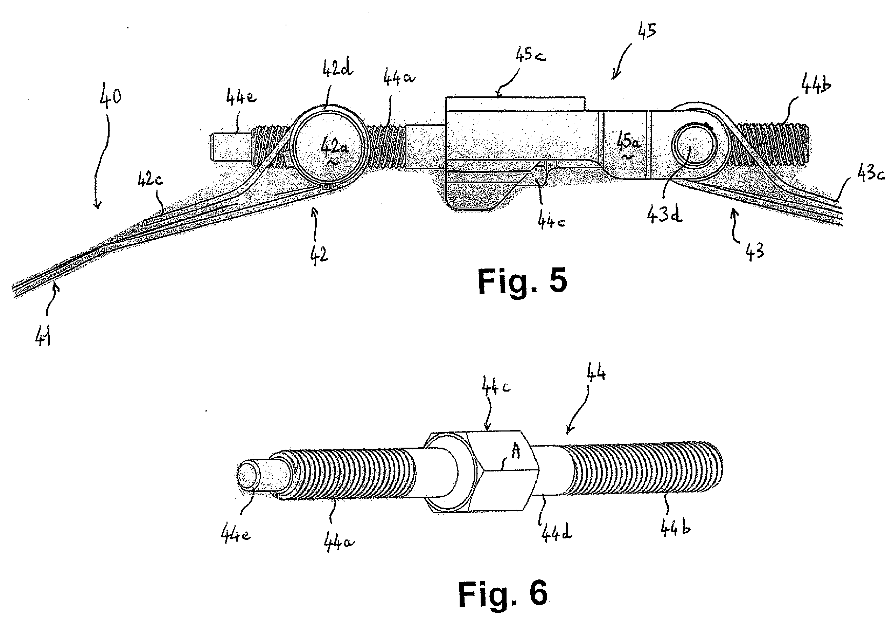

Comme illustré à la figure 2, le collier 40 selon l'invention est constitué d'une ceinture 41 formée par une bande annulaire de préférence métallique, dont au moins une paire d'extrémités 42 et 43 sont raccordées l'une à l'autre par des moyens de raccordement 44 à serrage réglable qui sont verrouillables par un organe de verrouillage 45 monté pivotant en une extrémité 43 (une seule paire d'extrémités 42, 43 raccordées avec ce serrage verrouillable est représentée à la figure 2, étant entendu qu'un collier 40 selon l'invention pourrait comporter plusieurs points de serrage verrouillables). A cet effet, ces moyens de raccordement 44 sont constitués d'une tige cylindrique de type goujon se terminant par deux filetages 44a et 44b en sens opposés guidés en rotation dans deux tourillons transversaux 42a et 43a fixés aux extrémités 42, 43 à raccorder, sous la commande d'un écrou de manoeuvre 44c de la tige 44 par exemple à six pans (visible aux figures 3, 6 et 7) qui est solidaire en rotation d'une portion centrale 44d de cette tige 44.

Plus précisément, les extrémités 42 et 43 à raccorder sont recourbées radialement vers l'extérieur et en sens opposé l'une de l'autre en formant chacune une partie 42b, 43b recourbée à 180° en forme de boucle se terminant par un méplat 42c, 43c surmontant la face radialement externe de la ceinture 41. Quant à chaque tourillon 42a, 43a, il est enveloppé par la partie recourbée 42b, 43b de la boucle correspondante en y étant calé dans l'exemple des figures 3 et 4 par une paire d'anneaux élastiques de retenue 42d solidaires de cette boucle et enserrant respectivement les extrémités latérales de ce tourillon 42a, 43a. Chaque partie recourbée 42b, 43b est ajourée pour laisser passer le filetage 44a, 44b correspondant de la tige 44 qui est guidé dans un orifice débouchant taraudé formés dans le tourillon 42a, 43a concerné (l'orifice taraudé de l'autre tourillon 43a, 42a présente un taraudage de sens opposé).

Comme illustré aux figures 3, 4 et 7, 8, l'organe de verrouillage 45 est formé d'une chape articulée sur l'un des tourillons 43a par des pivots 43d (un seul est visible) de sorte à coopérer en butée avec l'écrou 44c dans la position de verrouillage de la figure 4. Cette chape 45 présente deux ailes 45a et 45b qui sont articulées sur le tourillon 42a, 43a en s'étendant latéralement de part et d'autre de ce dernier et qui se terminent par un tronçon de verrouillage 45c venant au contact de l'écrou 44c en position de verrouillage pour l'empêcher de tourner. Ce tronçon de verrouillage 45c présente une section transversale en U renversé, pour envelopper l'écrou 44c latéralement par les ailes du U et le surmonter par l'âme de ce U.

Dans l'exemple spécifique aux figures 3 et 4, l'organe de verrouillage 45 est apte à venir se clipser réversiblement autour de l'écrou 44c par une compression élastique de son tronçon 45c contre les arêtes A de ses pans, comme visible dans la position de verrouillage de la figure 4.

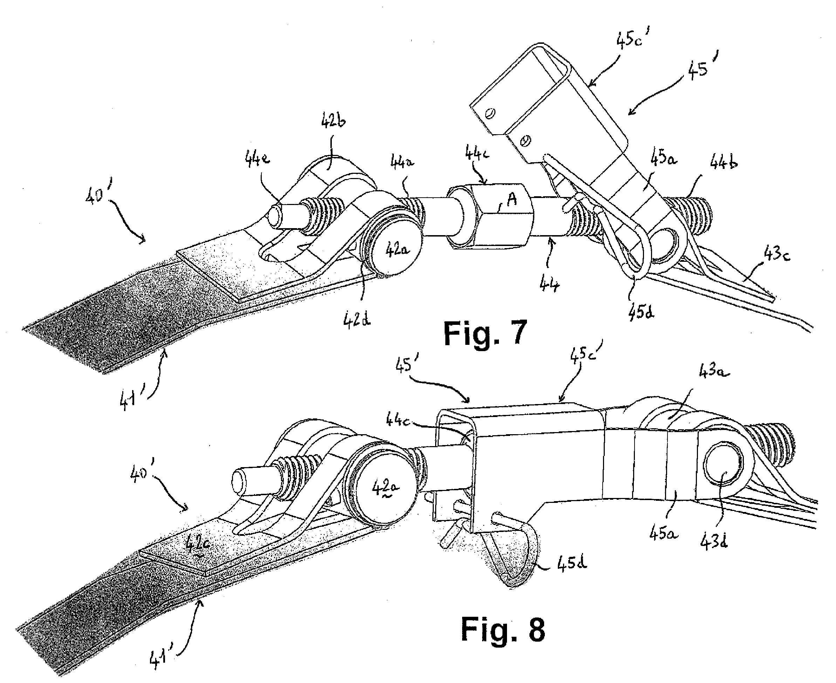

Dans l'exemple spécifique aux figures 7 et 8, l'organe de verrouillage 45' est de type non clipsable, étant apte à venir être monté au contact de l'écrou 44c par les ailes et l'âme de son tronçon 45c', lequel étant en outre muni d'une goupille transversale 45d par exemple de type bêta monté amovible à travers ces ailes et directement sous l'écrou 44c dans la position de verrouillage.

Comme indiqué ci-dessus, l'organe de verrouillage 45, 45' selon l'invention permet d'assurer un serrage fiable du collier 40, 40' en utilisation même sous des contraintes élevées, en s'opposant efficacement à son desserrage.

Pour faciliter l'insertion puis le serrage de la tige filetée 44 dans les tourillons 42a et 43a, on peut envisager de prévoir un téton 44e en l'une ou chacune des deux extrémités de cette tige 44, au-delà du ou de chaque filetage correspondant 44a, 44b (un seul téton 44d est représenté sur ces figures au-delà du filetage 44a opposé aux pivots 43d de l'organe de verrouillage 45, 45').

Afin d'éviter une rotation de chaque tourillon 42a, 43a sur lui-même dans la boucle correspondante de la ceinture 41, 41', on peut par ailleurs prévoir une butée (non illustrée) qui privilégie un positionnement déterminé de ce tourillon 42a, 43a, telle qu'une « bosse » sur le diamètre extérieur de ce dernier réalisée par ajout d'une pièce comme par exemple un clou cannelé.

## Revendications

1. Collier de serrage (40, 40') comportant une ceinture (41, 41') de préférence métallique présentant au moins une paire d'extrémités (42 et 43) espacées l'une de l'autre dans la direction circonférentielle, des moyens de raccordement (44) de la ou de chaque paire d'extrémités entre elles avec un serrage réglable dans cette direction et un organe de verrouillage (45, 45') des moyens de raccordement, **caractérisé en ce que** cet organe est monté solidaire de l'une de ces extrémités (43) en étant apte à occuper une position de déverrouillage où il est dégagé de ces moyens pour le serrage et desserrage du collier et une position de verrouillage où il vient en prise avec eux de sorte à s'opposer à ce desserrage.

2. Collier (40, 40') selon la revendication 1, **caractérisé en ce que** les moyens de raccordement (44) sont aptes à rapprocher ou à éloigner lesdites extrémités (42 et 43) l'une de l'autre par une rotation appliquée à ces moyens respectivement dans le sens d'un serrage ou d'un desserrage du collier, et **en ce que** l'organe de verrouillage (45, 45') est adapté pour s'opposer à la rotation de ces moyens dans la position de verrouillage.

3. Collier (40, 40') selon la revendication 2, **caractérisé en ce que** les moyens de raccordement (44) comprennent au moins une tige cylindrique présentant en ses portions terminales respectives deux filetages (44a et 44b) en sens opposés qui sont guidés en rotation dans deux premier et second tourillons transversaux (42a et 43a) fixés auxdites extrémités à raccorder (42 et 43), sous la commande d'un organe de manoeuvre (44c) de cette tige (44) solidaire en rotation d'une portion centrale (44d) de celle-ci, l'organe de verrouillage (45, 45') étant monté pivotant sur le premier tourillon (43a) de sorte à coopérer en butée avec cet organe de manoeuvre dans la position de verrouillage.

4. Collier (40, 40') selon la revendication 3, **caractérisé en ce que** l'organe de verrouillage (45, 45') est formé d'une chape articulée présentant deux ailes (45a et 45b) qui sont montées pivotantes sur ledit premier tourillon (43a) en s'étendant latéralement de part et d'autre de ce dernier et qui se terminent par un tronçon de verrouillage (45c, 45c') conçu pour entourer étroitement ledit organe de manoeuvre (44c) dans la position de verrouillage de sorte à l'empêcher de tourner.

5. Collier (40, 40') selon la revendication 4, **caractérisé en ce que** ledit organe de manoeuvre (44c) présente une forme d'écrou à plusieurs pans, par exemple à six pans, ledit tronçon de verrouillage (45c, 45c') présentant une section transversale sensiblement en U renversé qui est agencée pour être montée au contact dudit organe de manoeuvre en position de verrouillage, latéralement par les ailes du U et en le surmontant par l'âme de ce U.

6. Collier (40) selon la revendication 5, **caractérisé en ce que** ledit tronçon de verrouillage (45c) est apte à venir se clipser réversiblement autour dudit organe de manoeuvre (44c) en étant comprimé élastiquement contre des arêtes (A) desdits pans, au moins par lesdites ailes.

7. Collier (40') selon la revendication 5, **caractérisé en ce que** ledit tronçon de verrouillage (45c') est apte à venir au contact dudit organe de manoeuvre (44c) par lesdites ailes et ladite âme du U, ce tronçon étant en outre muni d'une goupille transversale (45d) par exemple de type bêta monté amovible à travers ces ailes et directement sous l'organe de manoeuvre dans la position de verrouillage.

8. Collier (40, 40') selon une des revendications 3 à 7, **caractérisé en ce que** lesdites extrémités à raccorder (42 et 43) sont recourbées radialement vers l'extérieur et en sens opposé l'une de l'autre en formant chacune une boucle d'un seul tenant avec le reste de la ceinture (41, 41'), lesdits tourillons (42a et 43a) étant enveloppés par les parties recourbées respectives (42b et 43b) de ces boucles en y étant immobilisés par des moyens de retenue (42d).

9. Collier (40, 40') selon la revendication 8, **caractérisé en ce que** ladite partie recourbée (42b, 43b) de chaque extrémité à raccorder (42, 43) est ajourée pour laisser passer les filetages respectifs (44a et 44b) de ladite tige (44), lesquels sont respectivement guidés dans deux orifices débouchants taraudés formés dans lesdits tourillons (42a et 43a) avec des taraudages de sens opposés.

10. Collier (40, 40') selon la revendication 8 ou 9, **caractérisé en ce que** lesdits moyens de retenue (42d) de chaque tourillon (42a, 43a) comprennent deux anneaux élastiques (42d) qui enserrent les deux extrémités latérales d'au moins ledit second tourillon (42a) de sorte à empêcher toute translation latérale de ce(s) tourillon(s) (42a, 43a) dans la boucle correspondante.

11. Dispositif de roulage à plat (30) destiné à équiper un ensemble monté (1) sans chambre à air pour véhicule automobile qui comprend une jante de roue (10) et un pneumatique (20) monté sur la jante, le dispositif étant destiné à soutenir le pneumatique suite à une chute de pression de gonflage et comprenant :
- un anneau de soutien (31) présentant une face de soutien (31a) radialement externe qui est destinée à soutenir le pneumatique en roulage à plat et dans laquelle est formé circonférentiellement au moins un renfoncement radial (31 b), et
- au moins un collier de serrage (40) qui enserre l'anneau de sorte à le maintenir sensiblement au contact de la jante en roulage et qui est appliqué sur ce renfoncement radialement en retrait de la face de soutien,
**caractérisé en ce que** le ou chaque collier est tel que défini à l'une des revendications précédentes.

## Patentansprüche

1. Klemmschelle (40, 40'), umfassend einen bevorzugt metallischen Reifen (41, 41'), der mindestens ein Paar Enden (42 und 43) aufweist, die in Umfangsrichtung voneinander beabstandet sind, Mittel (44) zum Verbinden des oder jedes Paars Enden miteinander mit einer Klemmung, die in dieser Richtung einstellbar ist, und ein Element (45, 45') zum Verriegeln der Verbindungsmittel, **dadurch gekennzeichnet, dass** dieses Element mit einem dieser Enden (43) einstückig montiert ist, indem es in der Lage ist, eine Entriegelungsposition, in der es aus diesen Mitteln zum Festklemmen und Lockern der Schelle gelöst ist, und eine Verriegelungsposition, in der damit in Eingriff kommt, um sich dieser Lockerung zu widersetzen, einzunehmen.

2. Schelle (40, 40') nach Anspruch 1, **dadurch gekennzeichnet, dass** die Verbindungsmittel (44) in der Lage sind, die Enden (42 und 43) durch eine Drehung, die auf diese Mittel jeweils in der Richtung eines Festklemmens oder eines Lockerns der Schelle ausgeübt wird, einander zu nähern oder voneinander zu entfernen, und dass das Verriegelungselement (45, 45') geeignet ist, um sich der Drehung dieser Mittel in der Verriegelungsposition zu widersetzen.

3. Schelle (40, 40') nach Anspruch 2, **dadurch gekennzeichnet, dass** die Verbindungsmittel (44) mindestens einen zylindrischen Schaft umfassen, der in seinen jeweiligen Endabschnitten zwei gegenläufige Gewinde (44a und 44b) aufweist, die in zwei ersten und zweiten Querlagerzapfen (42a und 43a), die an den zu verbindenden Enden (42 und 43) befestigt sind, durch die Steuerung eines Bedienungselements (44c) dieses Schafts (44), der mit einem zentralen Abschnitt (44d) desselben drehfest ist, drehmäßig geführt werden, wobei das Verriegelungselement (45, 45') auf dem ersten Lagerzapfen (43a) schwenkbar gelagert ist, um anschlagsmäßig mit diesem Bedienungselement in der Verriegelungsposition zusammenzuwirken.

4. Schelle (40, 40') nach Anspruch 3, **dadurch gekennzeichnet, dass** das Verriegelungselement (45, 45') aus einem angewinkelten Gabelstück gebildet ist, das zwei Schenkel (45a und 45b) aufweist, die auf dem ersten Lagerzapfen (43a) schwenkbar gelagert sind, indem sie sich seitlich auf beiden Seiten desselben erstrecken, und die in einem Verriegelungsstück (45c, 45c') enden, das ausgelegt ist, um das Bedienungselement (44c) in der Verriegelungsposition eng zu umschließen, um zu verhindern, dass es sich dreht.

5. Schelle (40, 40') nach Anspruch 4, **dadurch gekennzeichnet, dass** das Bedienungselement (44c) die Form einer Mutter mit mehreren Kanten, beispielsweise sechs Kanten, aufweist, wobei das Verriegelungsstück (45c, 45c') einen Querschnitt aufweist, der im Wesentlichen umgekehrt U-förmig ist und angeordnet ist, um mit dem Bedienungselement in der Verriegelungsposition seitlich über die Schenkel des U in Kontakt montiert zu werden, und indem es vom Steg des U überragt wird.

6. Schelle (40) nach Anspruch 5, **dadurch gekennzeichnet, dass** das Verriegelungsstück (45c) in der Lage ist, umkehrbar um das Bedienungselement (44c) herum aufgerastet zu werden, indem es gegen die Grate (A) der Kanten mindestens durch die Schenkel elastisch zusammengedrückt wird.

7. Schelle (40') nach Anspruch 5, **dadurch gekennzeichnet, dass** das Verriegelungsstück (45c') in der Lage ist, mit dem Bedienungselement (44c) durch die Schenkel und den Steg des U in Kontakt zu kommen, wobei dieses Stück ferner mit einem Querstecker (45d) beispielsweise nach Art eines Federsteckers versehen ist, der über diese Schenkel abnehmbar und direkt unter dem Bedienungselement in der Verriegelungsposition montiert ist.

8. Schelle (40, 40') nach einem der Ansprüche 3 bis 7, **dadurch gekennzeichnet, dass** die zu verbindenden Enden (42 und 43) radial nach außen und einander entgegengesetzt umgebogen sind, wobei sie jeweils eine einstückige Schleife mit dem Rest des Reifens (41, 41') bilden, wobei die Lagerzapfen (42a und 43a) von den jeweiligen umgebogenen Teile (42b und 43b) dieser Schleifen eingehüllt sind, indem sie dort durch Haltemittel (42d) festgehalten werden.

9. Schelle (40, 40') nach Anspruch 8, **dadurch gekennzeichnet, dass** der umgebogene Teil (42b, 43b) jedes zu verbindenden Endes (42, 43) durchbrochen ist, um die jeweiligen Außengewinde (44a und 44b) des Schafts (44) durchzulassen, die jeweils in zwei mit Innengewinden versehenen Ausmündungen, die in den Lagerzapfen (42a und 43a) gebildet sind, mit gegenläufigen Gewinden geführt werden.

10. Schelle (40, 40') nach Anspruch 8 oder 9, **dadurch gekennzeichnet, dass** die Haltemittel (42d) jedes Lagerzapfens (42a, 43a) zwei elastische Ringe (42d) umfassen, welche die beiden seitlichen Enden mindestens des zweiten Lagerzapfens (42a) derart umschließen, dass sie eine seitliche Verschiebung dieses bzw. dieser Lagerzapfen (42a, 43a) in der entsprechenden Schleife verhindern.

11. Notlaufvorrichtung (30), zum Ausstatten einer montierten Anordnung (1) ohne Luftkammer für Kraftfahrzeuge, umfassend eine Radfelge (10) und einen Luftreifen (20), der auf der Felge montiert ist, wobei die Vorrichtung dazu gedacht ist, den Luftreifen nach einem Reifendruckabfall abzustützen, und Folgendes umfasst:
- einen Stützring (31), der eine radial externe Stützseite (31a) aufweist, die dazu gedacht ist, den Luftreifen beim Notlauf abzustützen, und in der umfangsseitig mindestens eine radiale Vertiefung (31b) gebildet ist, und
- mindestens eine Klemmschelle (40), die den Ring umschließt, um ihn mit der Felge beim Notlauf im Wesentlichen in Kontakt zu halten, und die an dieser Vertiefung radial von der Stützseite zurückgesetzt angebracht ist,
**dadurch gekennzeichnet, dass** die oder jede Schelle wie in einem der vorhergehenden Ansprüche definiert ist.

## Claims

1. Clamp collar (40, 40') comprising a band (41, 41'), preferably made of metal, having at least one pair of ends (42 and 43) spaced apart in the circumferential direction, connecting means (44) for connecting the or each pair of ends together with adjustable tightening in this direction and a locking member (45, 45') for locking the connecting means, **characterized in that** this member is mounted solid with one of these ends (43) and is able to occupy an unlocked position in which it is disengaged from these means for tightening and loosening the collar and a locked position in which it engages with them to oppose this loosening.

2. Clamp collar (40, 40') according to Claim 1, **characterized in that** the connecting means (44) are able to move said ends (42 and 43) closer together or further apart through a rotation applied to these means in a direction of tightening or of loosening the collar respectively, and **in that** the locking member (45, 45') is designed to oppose the turning of these means in the locked position.

3. Clamp collar (40, 40') according to Claim 2, **characterized in that** the connecting means (44) comprise at least one cylindrical shank having, at its respective end portions, two screw threads (44a and 44b) of opposite hand which are guided in rotation in two first and second transverse journals (42a and 43a) fixed to said ends (42 and 43) that are to be connected, under the control of an operating member (44c) that operates this shank (44) and rotates as one with a central portion (44d) thereof, the locking member (45, 45') being pivot-mounted on the first journal (43a) so that it can cooperate by abutment with this operating member in the locked position.

4. Clamp collar (40, 40') according to Claim 3, **characterized in that** the locking member (45, 45') is formed of an articulated yoke having two flanges (45a and 45b) which are pivot-mounted on said first journal (43a) while extending laterally on each side thereof and ending in a locking section (45c, 45c') designed to closely surround said operating member (44c) in the locked position so as to prevent it from turning.

5. Clamp collar (40, 40') according to Claim 4, **characterized in that** said locking member (44c) is in the form of a multi-flat nut, for example having six flats, said locking section (45c, 45c') having a cross section substantially in the shape of an inverted U designed to be mounted in contact with said operating member in the locked position, with the flanges of the U along its sides and the web of this U over its top.

6. Clamp collar (40) according to Claim 5, **characterized in that** said locking section (45c) is able to be clipped reversibly around said operating member (44c), while being compressed elastically against edge corners (A) of said flats, at least by said flanges.

7. Clamp collar (40') according to Claim 5, **characterized in that** said locking section (45c') is able to come into contact with said operating member (44c) by said flanges and said web of the U, this section also being fitted with a transverse pin (45d), for example of the beta type, mounted removably through these flanges and directly under the operating member in the locked position.

8. Clamp collar (40, 40') according to one of Claims 3 to 7, **characterized in that** said ends (42 and 43) that are to be connected are curved radially outward and in opposite directions from one another each forming a loop of one piece with the remainder of the band (41, 41'), said journals (42a and 43a) being enveloped by the respective curved parts (42b and 43b) of these loops and being immobilized therein by retaining means (42d).

9. Clamp collar (40, 40') according to Claim 8, **characterized in that** said curved part (42b, 43b) of each end (42, 43) that is to be connected is holed to allow the respective screw threads (44a and 44b) of said shank (44) to pass, which screw threads are respectively guided in two open-ended tapped orifices formed in said journals (42a and 43a) with tappings of opposite hand.

10. Clamp collar (40, 40') according to Claim 8 or 9, **characterized in that** said retaining means (42d) of each journal (42a, 43a) comprise two elastic rings (42d) which surround the two lateral ends of at least said second journal (42a) so as to prevent any lateral translational movement of this/these journal/journals (42a, 43a) in the corresponding loop.

11. Run-flat device (30) intended to be fitted to a tubeless mounted assembly (1) for a motor vehicle which comprises a wheel rim (10) and a tire (20) mounted on the rim, the device being intended to support the tire following a drop in inflation pressure, and comprising:
- a support ring (31) having a radially external support face (31a) which is intended to support the tire under run-flat conditions and in which at least one radial recess (31b) is formed circumferentially, and
- at least one clamp collar (40) surrounding the ring so as to keep it substantially in contact with the rim under running conditions and which is pressed against this radial recess set back into the support face,
**characterized in that** the or each clamp collar is as defined in one of the preceding claims.
